# EUROPEAN PATENT SPECIFICATION

(11) **EP 0 289 789 B1**
(45) Date of publication and mention of the grant of the patent: **17.02.1993**
(21) Application number: 88105418.3
(22) Date of filing: 05.04.1988
(51) Int. Cl.: G01N 35/06

(54) **Automatic analysis apparatus**
Automatische Analysevorrichtung
Appareil automatique d'analyses

(30) Priority: 06.04.1987 JP 85285/87
(43) Date of publication of application: 09.11.1988
(73) Proprietor: JAPAN TECTRON INSTRUMENTS CORPORATION, Hachioji-shi Tokyo (JP)
(72) Inventor: Yokosuka, Takejirou, Hino-shi Tokyo (JP); Yokota, Kazutomi, Akigawa-shi Tokyo (JP); Mochida, Teruo, Hino-shi Tokyo (JP)
(74) Representative: Klunker . Schmitt-Nilson . Hirsch

(56) References cited:
- EP-A- 0 171 140
- EP-A- 0 216 026
- WO-A-82/03462
- FR-A- 2 387 443
- PATENT ABSTRACTS OF JAPAN, vol. 7, no. 168 (P-212)[1313], 23rd July 1983;& JP - A - 58 73870
- PATENT ABSTRACTS OF JAPAN, vol. 8, no. 97 (P-272)[1534], 8th May 1984;& JP - A - 59 9558

## Description

### BACKGROUND OF THE INVENTION

### 1) Field of the Invention:

The present invention relates in general to an automatic analysis apparatus and, in particular, to such a device as is capable of various analytical operations accurately at high speed, such as biochemical analysis, immunological analysis, determining the drug content in blood, and electrolytic analysis.

### 2) Description of the Prior Art:

Various types of automatic analysis apparatuses have been proposed, in which a sample is mixed with a reagent in order to observe the resultant reaction in an automatic manner. One such example is disclosed in the Japanese laid-open patent application 60-139553. It consists of a number of sample containers each containing a discrete sample arranged, together with diluent supply pipes, on a sample table; a number of reaction vessels laid on a reaction table that is disclosed in rotating around the sample table; a first and second group of reagents orderly set on a first and second reagent table, respectively; a sampling device for dispensing a sample from the sample table into one or more of the vessels on the reaction table; a first and second reagent dispensing mechanism each adapted to dispense a reagent from the reagent tables into the samples in the reaction vessels sequentially; and a photometric means for measuring the changes of the mixtures in them during a period of time by colorimetry.

However, this typical apparatus has been proved to be desirably fast and efficient in handling a large number of samples with proper identification of the reaction vessels for reagent dispensing. In addition, the photometer requires means to adjust the intensity of light rays passed through filters, making the construction complicated. Furthermore, this apparatus cannot be used for anything other than biochemical analysis.

Other devices have been designed for limited purposes and might have been constructed, but they would have been complicated mechanisms, large in size, with a resultant increase in cost to incorporate into them various analytical functions, such as for biochemical, immunological, and electrolytic analyses and measuring the drug content in blood, since they differ from one another in the sequence of handling samples in reaction with the reagents.

Another disadvantage of those conventional automatic analysis apparatuses is the inability to keep a reagent in a suitable condition until it is actually mixed with the sample. While some reagents used in enzyme analysis must be kept at between 2° to 10°C and others are readily affected by high temperature, the environments in which they are used may be at high room temperature, causing them to deteriorate.

In the EP 0 216 026 A1, an automatic analysis apparatus in accordance with the preamble of claim 1 is disclosed, however, this document does not specify the use of any detergents as part of the operations of the pipetting tubes.

In the FR-A-2387443 an analytical installation, particularly a nephelometric apparatus is specified, and in connection with such an apparatus, a certain way of cleaning of reagent pipettes is disclosed. This document teaches how a single pipette is moved from its position and cleaned within a cleaning fluid inside and outside. However, the document fails to mention or to suggest the specific features of the "cleaning system" defined in claim 1.

### Summary of the Invention

A primary object of the present invention is to provide an automatic analysis apparatus for clinical use capable of a variety of analytical operation, such as biochemical, electrolytic, and immunological analysis and measuring of the drug content in blood by the homogenous system antigen-antibody or the fluorescence method.

Another object of the present invention is to provide such a device capable of accurate operation at high speed.

An additional object of the present invention is to provide such a device which is simple in construction and can accordingly be built at low cost.

Still another object of this invention is to provide such a device which is very easy to operate in distributing samples and reagents or detergents between a large number of reaction vessels.

Still further object of this invention is to provide such a device capable of controlling the temperature of reagents.

The above and other objects, features and advantages of the present invention can be more fully understood and appreciated from the following detailed description of its specific embodiments together with the accompanying drawings in which similar parts are referred to by like reference characters.

### BRIEF DESCRIPTION OF THE DRAWINGS

The invention will now be described in greater detail with reference to the drawings.
FIG. 1 is a plan view of a first preferred embodiment of the automatic analysis apparatus according to the present invention;
FIG. 2 is a cross-sectional view of a sample pipetting means integrated with a reagent pipetting means for the embodiment of FIG. 1;
FIG. 3 is a schematic view of the sample pipetting means for the embodiment of FIG. 1;
FIG. 4 is a schematic view of a reagent pipetting means device for the embodiment of FIG. 1;
FIGs. 5 and 6 each show a schematic view of a different operating position of a photometer system for the embodiment;
FIG. 7 is a schematic view of a bead dispensing device for the embodiment;
FIG. 8 is a cross-section view of a cooling system for the reagent table of the automatic analysis apparatus according to the present invention;
FIG. 9 is a view taken along the line XIII-XIII of FIG. 8;
FIG. 10 is a perspective view of the reagent container;
FIG. 11 is a cross-sectional view of a temperature control system for the reagent table of the automatic analysis apparatus according to the present invention;
FIG. 12 is a view taken along the line XVI-XVI of FIG. 11;
FIG. 13 is a shielding partition for the temperature control system of FIG. 11.
FIG. 14 is a cross-sectional view of a second modification of the temperature control system for the reagent table of the automatic analysis apparatus according to the present invention; and
FIG. 15 is a perspective view of the temperature control system of FIG. 14.

### DETAILED DESCRIPTION OF THE PREFERRED EMBODIMENTS

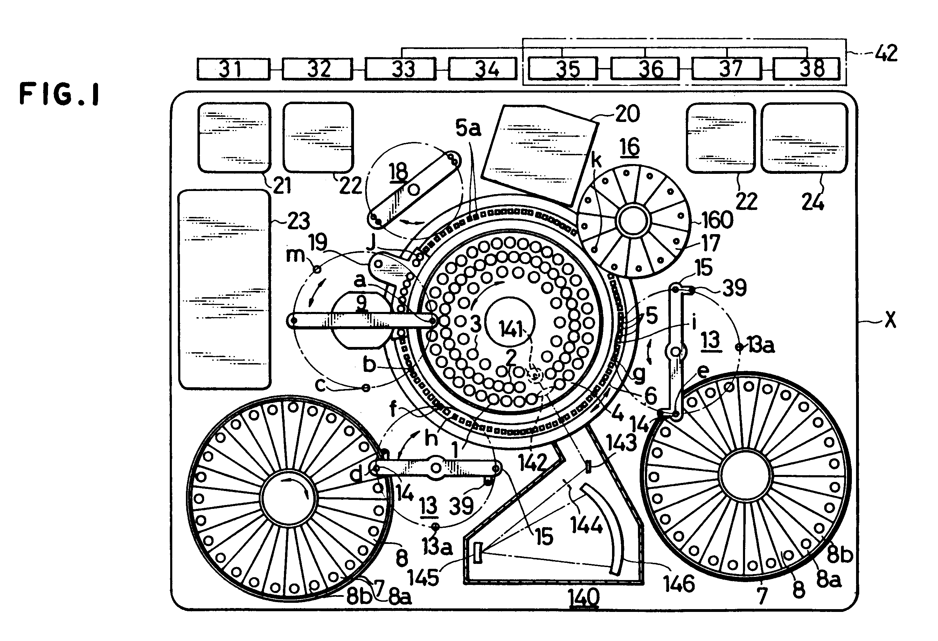

Referring first to FIG. 1, an automatic analysis apparatus constructed in accordance with a preferred embodiment of the present invention is indicated by the reference character X. The main units of the analyzer X includes a sample table 4 disposed for rotation about a vertical axis. A plurality of sample containers 1 are arranged along an outer diameter in the top surface of the sample table 4, and each contain therein a sample to be examined, such as blood serum or urine.

Also, a plurality of diluent sample containers 2 are laid on the sample table 4 along an inner diameter, internally of the sample containers 1, and each contains a diluent to be mixed with the sample so as to give a sample solution of a known concentration.

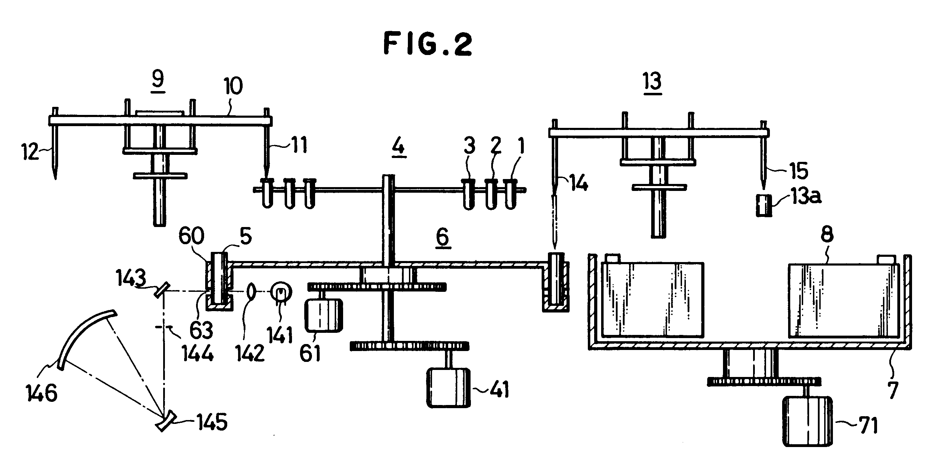

The sample table 4, as may best be shown in FIG. 2, is driven by drive means 41 in a stepping manner to bring the sample containers 1 successively to a predetermined sampling position, indicated at "a", where a measured amount of sample is taken from the sample container 1, as will later be described.

A reaction table 6 is rotatably disposed around the sample table 4 and carries a plurality of reaction vessels 5 arranged on its circumference. The reaction table 6 is rotated by a drive means 61 in a stepping manner to move the reaction vessels 5 successively to a predetermined discharge position, designated at "b", where the aliquot of sample taken from the cup at position "a" is discharged into the reaction vessel 5.

Similarly, a first and a second reagent table 7, 7 are provided, each with a plurality of reagent containers 8, 8 arranged around their peripheries. Each of the reagent containers 8 on the first reagent table contains a first reagent while the reagent containers on the second reagent table each contain a second reagent. The reagent tables 7, 7 are individually rotated by a separate drive means 71 to rotate their reagent containers 8 in an indexing manner to a predetermined position "d" (in the case of the first reagent table) or "e" (in the second reagent table), at which a measured amount of reagent is picked up, moved over to the reaction table 6, and discharged into the reaction vessel 5 that is just moved to position "f" (for the first reagent) or "g" (for the second reagent).

The sample table 4, the reaction table 6, and both reagent tables 7 are each provided with conventional sensor means, not shown, to identify each of their containers as they are rotated into the proper operating position for sampling, discharging or dispensing, so that the progress of the reaction for a particular sample in the cuvette can be followed up.

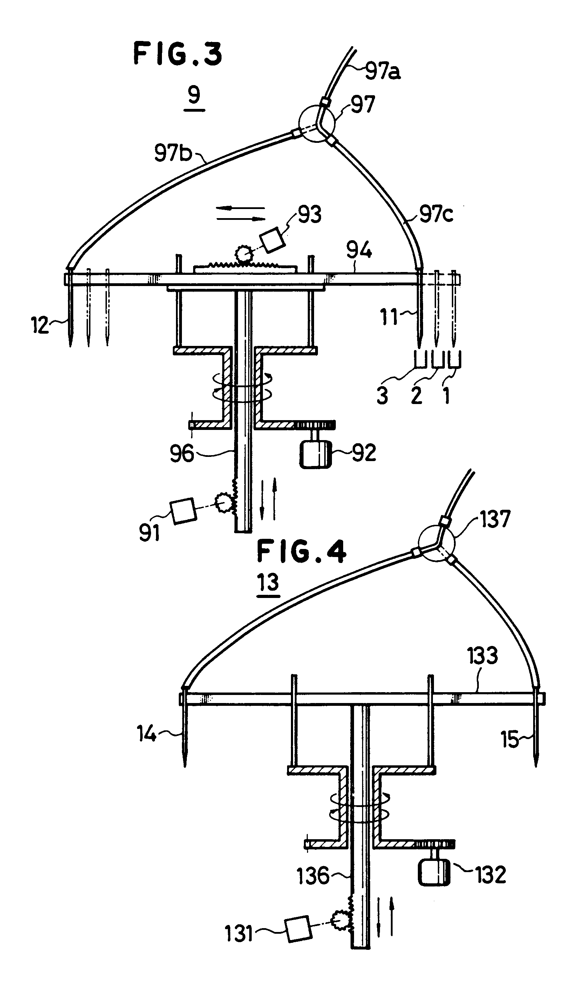

Referring now to FIG. 3, a sample pipetting device is provided adjacent to the sample table 10, which has a pair of first and second pipetting tubes 11 and 12 mounted on both ends of a horizontally sliding pipetting holder 94 for shifting the first and second pipetting tubes 11, 12 between three horizontally spaced positions. This sliding movement of the pipette holder 94 may be induced by a pinion and rack mechanism 93, with suitable conventional means, not shown, to lock the pipette holder 94 at each of the three positions as desired.

The pipette holder 94 is fixedly supported at its center on the top of a vertical column 96 pivotally disposed for rotation about its own axis. Operatively connected to the vertical column 96 is drive means 92, which rotates the pipette holder 94 about the vertical column 96. In addition, the vertical column 96 can slide vertically and may be moved by a rack and pinion mechanism 91 between an upper travelling position where the pipette holder 95 can be rotated to locate its first and second pipetting tubes 11 and 12 at their operating position and a lower operating position where the pipetting tube may be lowered into the container at its proper position for sampling or dispensing.

The first and second pipetting tubes 11 and 12 are connected to a sampling pump 21 (FIG. 1) through an electromagnetic control valve 97 which connects the sampling pump 21 to either of the pipetting tubes to control the suction and discharge of the pipetting tube.

In actual practice, the pipetting tube may be made to aspirate an amount of water first, and then the sample aliquot, with the interposition of enough air to prevent direct contact between them, so that the sucked water, after the dispensation of the aliquot into the reaction vessel 5, is forced out to flush the inside of the pipetting tube. preferably, this flushing may be carried out at a position diameterically opposite to position "a", to which the sample pipetting tube may be automatically rotated through 180° after each dispensation.

This design enables the first and second pipetting tubes 11 and 12 to be employed in an alternate manner. Rotation of the current pipetting tube, after discharge of its sample portion, to the flushing position brings the other sample pipetting tube to position "a". While this pipetting tube is used for sampling operation, the first pipetting tube is flushed out so that it is prepared for the next sampling operation, thereby reducing operating time.

With this arrangement, when, during actual operation, the one pipetting tube 11, for example, is lowered to its lower position at sampling position "a", the sampling pump 21 is driven to cause the pipetting tube 11 to pick up a predetermined amount of sample, since the electromagnetic valve 97 is now connecting the line 97c with the line 97a to which the pump 21 is connected. The pipetting tube 11 is then lifted upward to its traveling position and rotated horizontally to discharge position "b", where it is again lowered to its lower position to discharge the sucked-in sample of aliquot into the reaction vessel 5 that is now standing at that position. As will be clear from a study of FIG. 1, when the pipetting tube 11 is at position "b", the other pipetting tube 12 must stand at flushing position "m". Thus, immediately after the aliquot sample discharge by the pipetting tube 11, the electromagnetic valve 97 switches line connection to line 97b and the sampling pump 21 is activated to cause the pipetting tube 12 to discharge the remaining amount of flushing water to clean out the inside of the pipetting tube. Preferably, a trough should be placed at position "m" and filled with enough cleaning liquid so that when the pipetting tube 12 is in its lower position, its lower end portion will be submerged in the liquid for external cleaning. Adjacent to the trough, means may be provided to dry a wet pipetting tube 11 or 12 that has been dipped into the trough. After being cleaned, the pipetting tube 12 is ready for the next cycle of operation.

On both the first and second reagent tables 7, there is a pair of first and second reagent containers 8 on both sides of the sample table 4. These containers provide a measured amount of reagent, selected for the analysis being conducted, to the reaction vessel 5 at predetermined position "f" (in the case of the first reagent pipetting tube) or "g" (in the case of the second reagent pipetting tube).

Since the reagent pipetting means 13, 13 are substantially similar in construction to each other, only the first reagent pipetting means will be described. However, it should be understood that the description refers to the other reagent pipetting means as well.

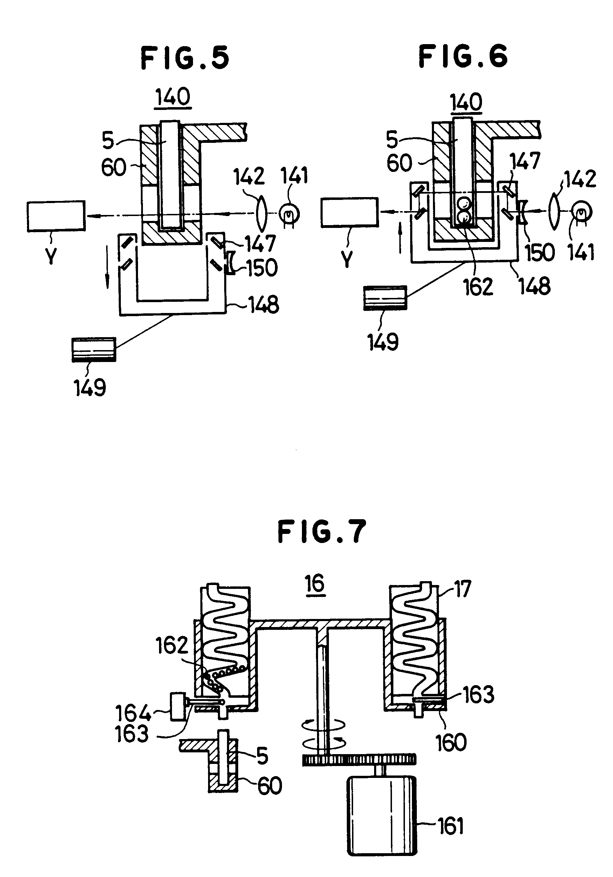

Referring to FIG. 4, the reagent pipetting means 13 consists of a vertical shaft 136 disposed for rotation about its axis, a pipette holder 133 fixedly supported at its midpoint on the top of the shaft 136, and a pair of reagent pipetting tubes 14 and 15 mounted at both ends of the pipette holder 133.

The shaft 136 is rotated by drive means 132 to turn through the pipette holder 133 the reagent pipetting tubes 14 and 15 for a purpose that will later be described. Also, the shaft 136 is moved vertically by a rack and pinion mechanism 131 to move the pipettes between an upper travelling position where the pipette holder 133 can be rotated by the drive means 132 and a lower operating position where the first reagent pipetting tubes can suck up an aliquot of reagent from the vessel lcoated at "d" or, in the case of the second reagent pipetting tube, "e", or discharge the sucked reagent aliquot into the cuvette that has just been moved to a predetermined dispensation position "f" or, in the case of the second reagent pipetting tube, "g".

The first and second reagent pipetting tubes 14 and 15 are connected to a reagent pump 22 via an electromagnetic valve 137 which switches connection to the pump 22 between the reagent pipetting tubes. The reagent pump 22 controls the suction and dispensation of the reagent aliquot. Preferably, sensor means, not shown, may be attached to each reagent pipetting tube to detect the lowering of the reagent pipetting tube into the reagent container for suction and send information to the mechanism 181 which in turns acts to prevent the reagent pipetting tube from being submerged too deep into the reagent.

As with the sample pipetting means 9, it is so designed that the pipetting tubes 14, 15 in operation sucks a proper amount of water first and then sucks the reagent aliquot, with the interposition of some air. The sucked water is used to flush the pipetting tube inside. This flushing may preferably be done at a predetermined cleaning position diametrically opposite to position "d" or, in the case of the second pipetting tube, "e" so that the pipetting tubes are used in an alternate manner.

With the above-mentioned arrangement, in operation, the reagent pipetting device 13 in the upper travelling position is rotated and lowered to a lower operating position at the proper container at position "d" or "e" (for a second reagent) to suck up a measured amount of reagent from the reagent container. Then, the pipette holder 133 is raised again and rotated to the reaction vessel 5 that has just been rotated to position "f" or "g" (for a second reagent), and lowered to position 538 or 548 (for the second pipetter), and lowered to bring the proper reagent pipetting devices 521 or 522 into the reaction vessel 22 to dispense the sucked reagent to mix the sample in it.

To blend the mixture in the reaction vessel 5 uniformly, agitator means 39 may preferably be provided attached to each of the reagent pipetting tubes 14 and 15, which is operated after each dispensing operation by the pipetting tube. The agitator means may comprise a nozzle, not shown, and an air pump, not shown, operatively connected to the nozzle through a line and adapted to supply air thereto when the nozzle is inserted into a reaction vessel 5. The distance between each pipetting tube and its nozzle may be such that the latter operates at position "h" or "i" two steps ahead of the dispensation position "f" or "g".

The sample table 4, reaction table 6, and both reagent tables 7 are operated in a timed relationship with the sample pipetting means 9 and both reagent pipetting means 13 so that the mixing of a sample or emergency sample, with or without a diluent, with a first and a second reagent in a particular reaction vessel 5 to produce the desired reaction to be monitored is controlled.

Preferably, their operation may be governed to conduct a particular analysis by a program in a microcomputer 33 with a CPU 35 for processing the analysis results with a disk unit 37 for storing the data, and a CRT display 36 or a printer 38 for outputting the data (FIG. 1).

Referring again to FIG. 1, a cleaning station 19 is provided, mounted adjacent to the sample table 4, for washing reaction vessels 5. When the reaction vessels 5, after the reactions taking place in them have been measured, are rotated to position "j", they are washed in a detergent supplied from a detergent pump 24 at the cleaning station "j". The cleaning may preferably be done in eight steps including washing with an alkali and acid cleaning agent.

Also, a photometer system 140 is provided for biochemical analysis of samples. It is so designed that the photometer system 140 measures progressively the changes in light absorbance of samples in reaction vessels 5 after they have been mixed with a reagent, so that the progress of the reactions taking place in them is monitored as the reaction vessels 5 are rotated in the reaction table 6. Referring further to FIGS. 1 and 2, the system 140 comprises a source of light 141 which produces an optical beam to traverse a lens 142 to pass through a reaction vessel 5. The optical beam leaving the reaction vessel is reflected by a reflector 143 to go through a slit 144 to a spherical diffraction grating 145 which disperses the beam to be sensed by an optical sensor 146 such as a photodiode capable of sensing a wide range of wavelengths. The wavelengths sensed in the dispersed optical beams are converted by an analog-to-digital converter to an electrical signal to be computed to determine the density of the liquid in the reaction vessels.

Each reaction vessel 5 has a pair of diametrically opposed slits 63 opened in its receptacle 60, as may best be depicted in FIG. 2, through which the beam from the light source 142 is passed through its contents for scanning.

In biochemical analysis, where a sample requires mixing of two or more reagents from the reagent table 7, they are arranged in a required number of reagent containers 8 arranged in ordered sequence on the table. In this case, the reagent table 7 may be controlled to rotate back one step after every preceding reagent is dispensed so that the first and second reagent pipetting tubes 14, 15 discharge the subsequent reagent at the same reagent dispensing position "f" or "g".

A sampling position for electrolytic analysis, designated at position "c", may preferably be located on the diameter of rotation of the sample pipetting means 9 in the retracted position of its arm. In electrolytic analysis, which may be carried out simultaneously with biochemical analysis, a container may be placed at position "c" to receive part of a sample through the sample pipetting means 9, and transported mechanically or manually to an electrolytic analyzer 23 where the sample is electrolytically measured (FIG. 1). The analyzer 23 may preferably be connected to the CRT display 36 which processes electrolytical readings.

Also, provision may be made for EIA analysis means 16 of samples in bead solid phase. Referring to FIGS. 1 and 7, a bead table 160 is located adjacent to the reaction table 6, which consists of a plurality of bead stockers 17 circumferentially arranged in the bead table 160, a drive means 161 which rotates the bead table 160 in a stepping manner to move the stockers 17 successively to a predetermined feed position "k" where beads 162 are fed into the reaction vessels 5 as they are rotated to this position, and a lever 163 which is actuated by an electromagnetic solenoid 164.

A bead disposal device 18 is mounted at a proper point along the reaction table 6 from the bead table 160, which removes the beads 162 from the reaction vessels 5 after they are rotated, after the completion of the measurement, to a predetermined position, not shown, where the beads 162 are removed from the reaction vessel 5. The device 18 may be composed of a suction nozzle for collecting beads by suction, lifting means to move the nozzle into the reaction vessel, and drive means to rotate the nozzle to the bead disposal position.

In a more preferred embodiment, an optical beam transmitting means is provided which includes a movable frame 148 adapted to carry thereon said reaction vessels 6 and movably disposed for vertical movement relative to said reaction vessels 5 between an upper position for EIA analysis of samples in bead solid phase and a lower position for biochemical analysis. In the upper position, the optical beam from the light source 141 traverses the reaction vessel 5 to be scanned through a straight horizontal path to be scanned by the optical sensor Y. On the other hand, in the lower position of the frame, the optical beam is guided to pass through an optical system composed of a lens 142 for focal adjustment and four reflectors 147, arranged at each monitoring location in the frame 148, such that the optical beam is allowed to traverse the reaction vessel 5, without being interrupted by the beads lying in the lower part of the reaction vessel 5, to be sensed by the optical sensor Y. Furthermore, this arrangement can provide for measuring with small amounts of sample in reaction vessels 5.

In addition, located between the bead table 160 and bead disposal device 18 is a fluorescence analyzer 20 which measures the density of drugs contained in blood. The procedure for fluorescence analysis using analyzer 20 is substantially similar to biochemical analysis, except that the rotation of the reaction table 6 must be arrested during operation.

In operation, the sample in a reaction vessel 5 is disposed to be excited by an optical beam passed through an interference filter, which may be of a type capable of producing a wavelength of 485 nm. The light leaving the sample is passed through a second interference filter, which may be a type capable of producing 525 nm, to be sensed by an optical sensory. The analyzer 20 may preferably be connected to a computing system which computes readings amplified and converted in digital form to determine the density of drugs contained in the sample.

Referring then to FIGS. 1, 2, 3 and 4, besides the foregoing means to move the reagent containers 8 on the reagent tables 7 sequentially and the reagent pipetting means 13 to dispense a predetermined amount of reagent from one of the reagent containers 8 into a reaction vessel 5 containing a sample for analysis of the resultant reaction in the vessel, the analyzer X may include means by which the reagent pipetting means 13 washes itself at intervals using detergent kept in reagent containers 8a and 8b placed on the reagent tables 8. Washing may be achieved by causing the reagent pipetting means 13 to pick up an aliquot of detergent from one of the detergent container 8a, 8b and discharge it into a reaction vessel 5 that has just been moved into the washing position. This washing feature is added to insure reliability and precise analysis by preventing contamination by reagent from earlier operations that might be adhering to the pipetting tube 14 or 15 of the reagent pipetting means.

Each of the reagent tables 7 may hold a variety of reagents in reagent containers 8 for different kinds of intended testing, and, in this particular embodiment a pair of detergent containers 8a and 8b each containing a different detergent, used to wash from the pipetting tube 14, 15 any residue of previously used liquids that might remain adhered thereto. The detergent container 8a may contain an acid detergent, for example, a non-ion acid detergent, while the other container 8b may hold an alkali detergent, for instance, a special basic detergent.

With this arrangement, it may be designed that the reagent pipetting means 13 puts its first and second pipetting tubes 14 and 15 to the washing operation at a predetermined time interval, for example, at the end of a cycle in which every 40 samples are handled in the analytical process of reagent dispensing and intended tests and measurements including determination of absorbency.

In this particular embodiment, it is so programmed that the washing operation is started when a particular selected reaction vessel 5 on the reaction table 6 advances 40 steps from a predetermined reference point. At the end of the washing operation, the analyzer X is again put back to the suspended analysis until, at the end of a second round of work with 40 samples, the next cycle of washing is started again.

The above periodic operation of washing may be programmed into a sequence of steps for the analyzer X. When the washing operation starts according to such a predetermined sequence, the reagent table 7 is rotated to move the detergent container 8a to the pick-up position "d", and the reagent pipetting means 13 , now suspended of dispensing reagent into a reaction vessel 5, brings its pipetting tubes 14, 15 about in turn allowing them to pick up a predetermined amount of acid detergent from the detergent container 8a. Then, the pipetting tubes 14, 15 turn around to a discharge position "f" in turn where the sucked up detergent aliquot is discharged from each pipetting tube into a reaction vessel 5a that has just been rotated to that position so that the residue of detergent from earlier operations is flushed. This reaction vessel 5a is already washed by the cleaning device 19 and contains no mixture of sample and reagent. Needless to say, positioning an idle reaction vessel 5a for pipetting tube cleaning to the discharge position "d" is timed with the cycle of washing operation according to the program.

After the discharge position "f", the pipetting tubes are rotated to a cleaning trough 13a of fresh water where they are rinsed. This washing in detergent and rinsing in pure water is repeated several times. Then, the reagent table 7 is rotated to move a second detergent container 8b containing alkali detergent to the pick-up position "d" where the pipetting tubes 14, 15 are caused to suck up an aliquot of alkali detergent and then turned to the discharge position "f" where they are allowed to discharged the sucked detergent into a reaction vessel 5a that has just been rotated to that position. In this way, the pipetting tubes 14, 15 are cleaned of the residue of reagent that might remain adhered thereto from earlier operation as described above in association with the detergent container 8a. Likewise, the first and second pipetting tubes 14, 15 are brought to the cleaning trough 13a and rinsed with pure water.

This washing operation with alkali detergent is also repeated several times, the pipetting means 13 are returned to the suspended analysis and the reaction vessel 5a is moved to a predetermined reaction vessel cleaning position "j" where the reaction vessel 5a is cleaned of the waste.

In this way, the first and second pipetting tubes 14 and 15 of the reagent pipetting means 13 can be kept always clean. Without this, since the pipetting tubes 14, 15 are constantly plunged into different kinds of reagents and so measured with some particular ingredients contained in them that might remain adhered to the tube from earlier operations and that might affect the process of reaction in the next operation with a different reagent, deteriorating the performance of the analyzer X, even if the pipetting tubes 14, 15 are washed with pure water.

By washing the pipetting tubes 14, 15 with detergents and pure water at an interval in the progress of analysis, 24-hour continuous operation becomes possible, particularly convenient when this is necessary for emergencies.

Thus, according to the above-mentioned embodiment, speedy cleaning of the pipetting tubes 14, 15 of the reagent pipetting means 13 and the reaction vessel 5a can insure the reliable and precise operation of the analyzer X and prevent possible loss of performance that might result from the residue of liquids from earlier operation.

It is to be noted that the present invention should not be limited to the above illustrated embodiments, but applicable to other forms of analyzer construction. For example, the layout of reagent containers and the shape of the reagent tables may be linear, with the reagent containers being moved along a straight line. Also, this invention puts emphasis on the washing of the pipetting tubes of the reagent pipetting means, not on a particular configuration of washing means, so that there are a considerable variety of washing means besides the above-described embodiments.

Furthermore, a temperature control system 31 may preferably be provided which controls the temperature of the reaction vessels 5 at a constant level.

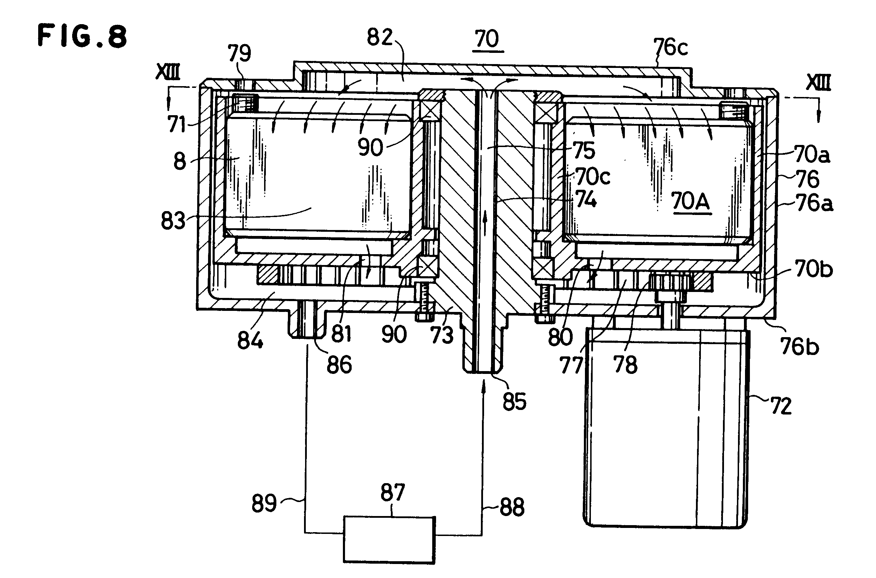

Referring further to FIGS. 8 through 10, a conditioning means for controlling the temperature of the reagent containers 8 may preferably be provided in each of the first and second reagent tables 70. Since the both temperature control means are substantially similar in construction to each other, the one for the first reagent table 70 will be described. Thus, it should be understood that the description also refers to the other control means as well.

The reagent table 70 is supported by a fixed vertical column 73 in the center having an axial hollow portion 74. Also, the reagent table 70 includes a circular side plate 70a, a bottom plate 70b, and an inner plate 70c. The side plates 70a and 70c and bottom plate 70b form together a toroidal tray, generally designated at 70A, disposed to rotate on the column 73 through vertically spaced bearings 90 and rotated by the drive means 72 through its driving gear 78 that is in turn engaged with an internal gear 77 affixed to the underside of the bottom plate 70b.

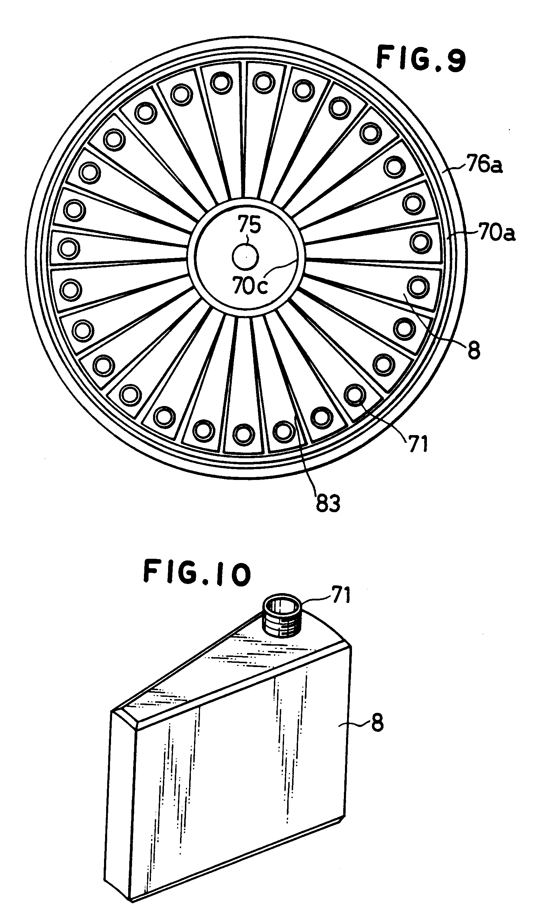

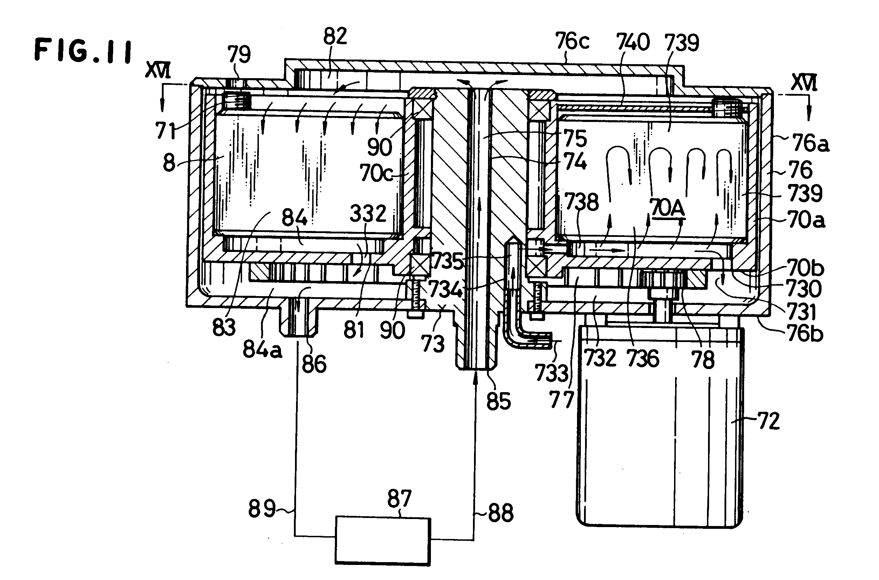

The plurality of reagent containers 8 may preferably be shaped in cross section, like a uniform sector of a circle, as depicted in FIG. 10, with an opening 71 at their top for sampling by the reagent pipetting tubes 14, 15, and arranged in a radial pattern, as shown in FIG. 9, between the side plates 70a and 70c of the toroidal tray 70A, with a gap 83 between the reagent containers 8 for proper ventilation.

The toroidal tray 70A is enclosed by an outer housing 76 composed of a side plate 76a, a bottom plate 76b, and a top cover 76c, as may best shown in FIG. 8, with the bottom plate 76b secured to the column 73. The top cover 76c is levelled high enough above the top of the vessels 8 to provide a space 82 beneath the cover.

Furthermore, the bottom plate 70b of the toroidal tray 70A may preferably raised, along with the internal gear 77 at its bottom, from the bottom plate 76b to provide a space 84 below the tray 70A. In addition, a number of throughholes 81 are defined through the bottom plate 70b and internal gear 77.

The cooling means 87 may be any suitable type of known design capable of generating cooled air, which consists of a supply line 88 and a return line 89. The supply line 88 is connected to an inlet port 85 defined in the hollow portion 74 of the column 73 at its lower part to supply the toroidal tray 70A with cooled air through an axial passage 75 defined in the hollow portion 74.

The return line 89 is connected to circumferential vent holes 86 in the bottom of the bottom plate 76b.

With the above arrangement, the cooled air from the cooling means 87 can be circulated in the toroidal tray 70A, through the passage 75, space 82 between the top cover 76c and vessels 8, gaps 83 between the vessels, throughholes 81 in the bottom plate 70b, and space 84 beneath the plate 70b before returning to the means 87 through the return line 89.

The cooling means 87 may preferably be connected to a temperature control, not shown, to provide required temperature control depending on the type of the reagent used. This design can not only cool the liquid in the reagent containers 8 but also optimize cooling since the toroidal tray 70A is housed in a virtually airtight enclosure, with resultant low cooling cost.

Referring to FIGS. 11 through 13, a modification of the conditioning means of FIGS. 8 through 10 will be described. Although most reagent requires strict temperature control for desired reaction with the sample with which it is mixed, different reagents must be kept at different levels of temperature. For example, enzymatic reagents need to be maintained at 2 to 10°C while others, if cooled too excessively, tend to lose their activity in reaction or crystallize. When different reagents requiring control at different temperature levels have to be carried on a reagent table at the same time, provision must be made to give separate temperature control.

To this aim, the toroidal tray 70A is divided into two portions, one of which is kept at room temperature, and reagents which should be maintained at room temperature are stored in this portion. The other portion is connected to the cooling means 87 for cooling reagents which require to be kept at low temperatures.

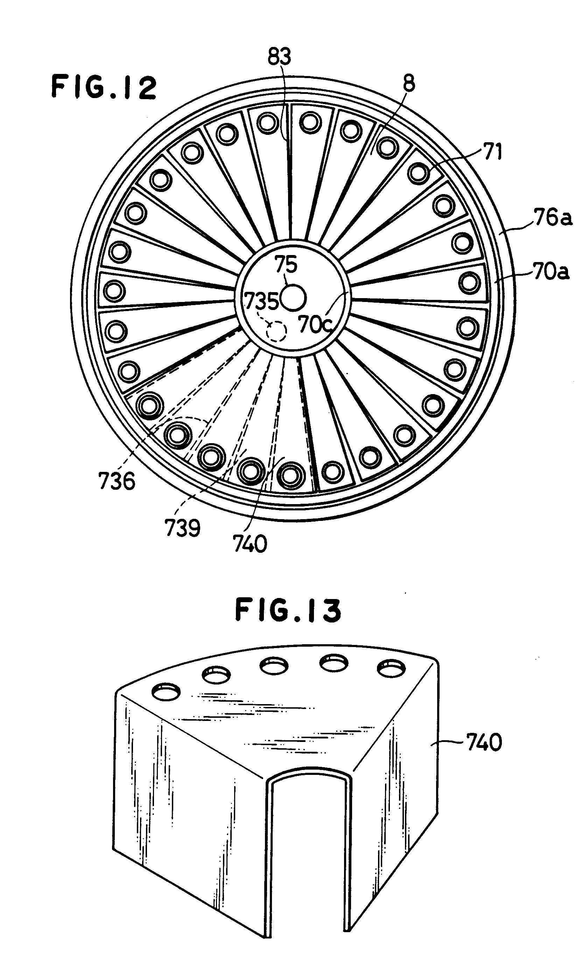

A sectorial shell 740, preferably shaped as in FIG. 13 and made of a heat insulating material, is provided. Having the substantially same radius as the circular side wall 70a of the toroidal tray 70A, it is fitted snugly within the tray, as illustrated in FIG. 12 to isolate a group of containers 739 containing a first reagent to be maintained at room temperature. The rest of reagent containers 8 in the tray 70A each contain a second reagent to be cooled to low temperature as by means of the cooling means 87.

A second vertical passage 735 is defined in the vertical column 73 to open to the atmosphere through an inlet port 733 provided at the lower end of the passage. Connected to the passage 735 is a space 738 defined below the bottom of the containers 739 through a vertical opening formed along the inner periphery of the shell 740. In that part of the bottom plate 70b falling beneath the containers 739 are defined a number of throughholes 730 to intercommunicate the space 738 and gaps 736 defined between the side walls of the containers 739.

With the above arrangement, the cooled air from the cooling means 87 first enters the vertical central passage 75 through an inlet 85, moving into the space 82 defined between the top cover 76c and the top of the reagent containers 8 in the tray 70A and then through the gaps 83 between the sides of adjacent containers 8 into the space 84 formed between the bottom of the containers 8 and bottom plate 70b. The air leaving the space 84 enters the bottom space 84a defined between the bottom plate 70b and the bottom 76b of the outer housing 7b through holes 81 in the bottom plate 70b before exiting the tray 70A through the vent hole 86 to return to the cooling means 87 through the return line 89. In this particular embodiment, the cooling occurs in the leftside of the toroidal 70A in FIG. 11. The numeral 332 indicates, in the form of an arrow, the direction of air flow.

Ambient air entering at the port 733 goes through the passage 735, the gaps 736 between the containers 739 and the throughholes 730.

In this manner, the reagent vessels 739 are placed in a circulation of ambient air, insulated in the shell 740 from the cooled environment in which the rest of reagent containers 8 are placed under low temperature control.

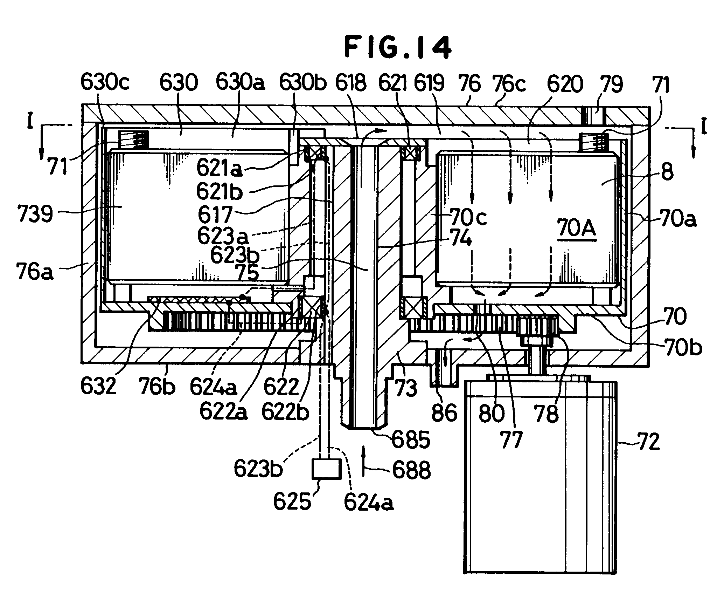

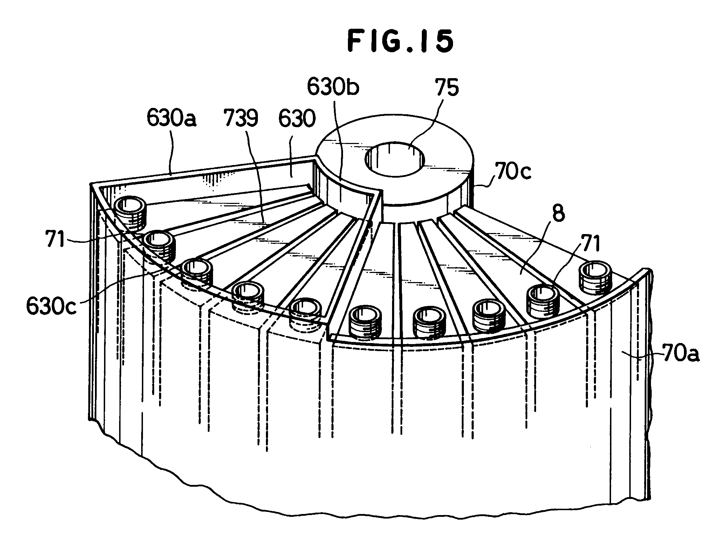

Another embodiment of the separate temperature control system for the reagent tables 13 will be described with reference to FIGS. 14 and 15. This embodiment is constructed with the basic structure of the earlier embodiment described above in association with FIGS. 8 and 9 and hence similar parts are indicated by like reference numbers and characters.

In this particular embodiment, the cooling air from a cleaning means, not shown, enters the reagent table from an entrance 685 opened at the lower end of the vertical hollow column 73 via a supply line 688. The cooling air moves up the passage 75 formed in the axial hollow portion 75 of the vertical column 73 into the joining section 619 and then takes a downward path following the arrows in the cooling section 620 so that the top portions and sides of the reagent containers 8 are fully exposed to the flow of the cooling air, losing their heat through contact with it by the effect of heat exchange.

The cooling air is then forced to exit the cooling section 620 and leave the reaction table via the vent hole 86, and is discharged into the atmosphere. In an alternative modification, the vent hole 86 may be connected to the cooling means, not shown, by a return line so that the air leaving the reagent table is re-cooled for re-circulation.

The toroidal tray 70A also has a room temperature section 630 in which reagent can be kept at room temperature in reagent containers 739. The room temperature section 630 may comprise a heating element 632 that is placed in the space in the reagent table 7 just below the room temperature section.

In this embodiment, the heating element 632 is connected to a switch, not shown, in a terminal box 625, which in turn is connected to a power source, and includes a heating circuit comprised of a contact 621b, a cable, depicted in broken lines in FIG. 14, and bearings 622 made of a conductive material.

The cable may be extended in an axial groove part defined in the fixed column 73 or in the space defined between the fixed column 73 and the inner plate 70c.

With this arrangement, closing the switch in the terminal box connects a power source, not shown, to the heating element 632, which in turn generates heat to keep the heating section 630 at a desired temperature or, depending on the capacity of the heating element, at room temperature. Because of the design described above, this heating system can be built in a simple construction, without addition of any special device, except for the heating element 632 and its heating circuit.

In addition, because of the design of the toroidal tray that the room temperature section 630 has its wall members 630a, 630b and 630c extended above the circular side plate 70a, entrance of the cooling air in the cooling section 620 through the passage 75 into the room temperature section 630 is prevented. In this way, the reagent table 7 provides for storing different kinds of reagent at different temperatures, with the reagent containers 8 in the cooling section 630 kept cool while the reagent containers 739 are maintained at warmer or room temperature.

In addition, selection of the capacity of the element 632 and the cooling means, temperature control of a variety of kinds of reagent can be stored, filled in reagent containers 8, 739 in the sections 630, 620 in spite of changes of temperature in external environment where the analyzer X is operated.

## Claims

1. An automatic analysis apparatus having a sample table (4), a reaction table (6) mounted around the sample table (4), a plurality of reaction vessels (5) arranged on the reaction table (6), a sample pipetting means (9) mounted adjacent to the reaction table (6), at least a pair of reagent tables (7, 7) situated externally of the reaction table (6), reagent pipetting means (13, 13) provided between the reaction table (6) and each reagent table (7, 7), a plurality of reagent containers (8, 8) mounted on each of the reagent tables (7, 7), a pair of pipetting tubes (14, 15) mounted on each of the reagent pipetting means (13, 13) to suck up a measured amount of reagent from a reagent container (8) and dispense it into a reaction vessel (5) and a cleaning trough (13a),
characterized by the combination of the following features:
a first group of detergent containers (8a, 8a) and a second group of detergent containers (8b, 8b) also mounted on each of the reagent tables (7, 7);
means for causing the pipetting tubes (14, 15), alternatively after completing each dispensing operation, to pick up a measured amount of detergent from one selected from the first group of detergent containers (8a, 8a) or the second group of detergent containers (8b, 8b) at a preset pick-up position (d), to move over to the reaction table (6) and to discharge the detergent into an empty reaction vessel (5) at a discharge position (f) and to move to the cleaning trough (13a), which is mounted at a position opposite the discharge position (f) and provided to hold therein pure water for rinsing the emptied pipetting tubes (14, 15).

2. An automatic analysis apparatus as set forth in Claim 1, characterized in that at least one of the reagent tables (7, 7) is mounted on a stationary vertical column (73) and rotatably disposed on bearings (621, 622) provided at opposite ends of a vertical column (73), each of the reagent tables (7, 7) includes a partition means comprised of wall members (630a, 630b, 630c) to divide the inside of the reagent table (7, 7) into a low temperature compartment (620) and a room temperature compartment (630), heating elements (632) adapted to keep the room temperature compartment (630) at a predetermined temperature level and an electrical system connected to a source of electricity and adapted to energize the heating elements (632) in which a switch means (625) supplies electricity to the heating elements (632) through a first stretch of conductive line (623) interconnected between the heating elements (632) and points of contact (621a, 621b, 622a, 622b) fixedly provided in the bearings (621, 622) that are made of an electrically conductive material, a second stretch of conductive line (632b, 624a) interconnected between the points of contact (621a, 621b, 622b) and the switch means (625).

## Patentansprüche

1. Automatische Analysevorrichtung mit einem Probentisch (4), einem um den Probentisch (4) herum gelagerten Reaktionstisch (6), mehreren Reaktionsgefäßen (5), die auf dem Reaktionstisch (6) angeordnet sind, einer Proben-Pipettiereinrichtung (9), die dem Reaktionstisch (6) benachbart gelagert ist, mindestens einem Paar Reagenztische (7, 7), die außerhalb des Reaktionstisches (6) gelegen sind, Reagenz-Pipettiermittel (13, 13), die zwischen dem Reaktionstisch (6) und jedem Reagenztisch (7, 7) vorgesehen sind, mehreren Reagenzbehältern (8, 8), die auf jedem der Reagenztische (7, 7) gelagert sind, einem Paar Pipettierröhrchen (14, 15), die auf jedem der Reagenz-Pipettiermittel (13, 13) gelagert sind, um eine abgemessene Menge Reagenzmittel aus einem Reagenzbehälter (8) anzusaugen und sie in ein Reaktionsgefäß (5) auszugeben, und einem Reinigungsnapf (13a),
**gekennzeichnet durch**
die Kombination der folgenden Merkmale:
eine erste Gruppe von Detergensbehältern (8a, 8a) und eine zweite Gruppe von Detergensbehältern (8b, 8b), die ebenfalls auf jedem der Reagenztische (7 , 7) gelagert sind;
eine Einrichtung, die die Pipettierröhrchen (14, 15) veranlaßt, nach Beendigung jedes Ausgabevorganges abwechselnd eine abgemessene Menge Detergens aus einer ausgewählten Gruppe aus der ersten Gruppe von Detergensbehältern (8a, 8a) oder der zweiten Gruppe von Detergensbehältern (8b, 8b) an einer vorgegebenen Aufnahmeposition (d) aufzunehmen, sich über den Reaktionstisch (6) zubewegen und das Detergens an einer Austragposition (f) in ein leeres Reaktionsgefäß (5) auszutragen, und sich zu dem Reinigungsnapf (13a) zubewegen, der an einer Stelle gegenüber der Austragposition (f) angeordnet ist und dazu dient, in sich reines Wasser zum Spülen der geleerten Pipettierröhrchen (14, 15) aufzunehmen.

2. Automatische Analysevorrichtung nach Anspruch 1,
**dadurch gekennzeichnet,**
daß zumindest einer der Reagenztische (7, 7) an einer ortsfesten vertikalen Säule (73) gelagert und drehbar auf Lagern (621, 622) angeordnet ist, die an entgegengesetzten Enden einer vertikalen Säule (73) vorgesehen sind, wobei jeder der Reagenztische (7, 7) eine Unterteilungseinrichtung enthält, welche Wandelemente (630a, 630b, 630c) zum Unterteilen der Innenseite des Reagenztisches (7, 7) in ein Niedrigtemperaturabteil (20) und ein Zimmertemperaturabteil (630) enthält, außerdem Heizelemente (632), mit denen das Zimmertemperaturabteil (630) auf einem vorbestimmten Temperaturniveau gehalten wird, und ein elektrisches System, welches an eine Elektrizitätsquelle angeschlossen ist und dazu dient, die Heizelemente (632) zu speisen, wobei eine Schaltereinrichtung (625) den Heizelementen elektrischen Strom über einen ersten Leitungsstrang (623) zuführt, der zwischen die Heizelemente (632) und Kontaktpunkten (621a, 621b, 622a, 622b), die fest in den aus elektrisch leitendem Material bestehenden Lagern (621, 622) vorgesehen sind, geschaltet ist, und über einen zweiten Leitungsstrang (632b, 624a) zuführt, der zwischen den Kontaktpunkten (621a, 621b, 622b) und der Schaltereinrichtung (625) gelegt ist.

## Revendications

1. Appareil d'analyses automatique comportant une tablette à échantillons (4), une tablette de réaction (6) montée autour de la table à échantillons (4), une pluralité de récipients de réaction (5) agencés sur la table de réaction (6), un moyen de pipetage d'échantillons (9) adjacent à la tablette de réaction (6), au moins une paire de tablettes à réactifs (7, 7) situées à l'extérieur de la tablette de réaction (6), des moyens de pipetage de réactifs (13, 13) prévus entre la tablette de réaction (6) et chaque tablette à réactifs (7, 7), une pluralité de récipients de réactifs (8, 8) montés sur chacune des tablettes à réactifs (7, 7), une paire de tubes de pipetage (14, 15) montés sur chacun des moyens de pipetage de réactifs (13, 13) pour aspirer une quantité mesurée de réactif d'un récipient de réactif (8) et la distribuer dans un récipient de réaction (5) et une cuvette de nettoyage (13a), caractérisé par la combinaison des caractéristiques suivantes : un premier groupe de récipients de détergent (8a, 8a) et un second groupe de récipients de détergent (8b, 8b) montés également sur chacune des tablettes à réactifs (7, 7), des moyens pour amener les tubes de pipetage (14, 15), alternativement après la réalisation de chaque opération de distribution, à prélever une quantité mesurée de détergent d'un détergent choisi parmi le premier groupe de récipients de détergent (8a, 8a) ou le second groupe de récipients de détergent (8b, 8b) en une position de prélèvement préétablie (d), à se déplacer vers la tablette de réaction (6) et à décharger le détergent dans un récipient de réaction vide (5) en une position de déchargement (f) et à se déplacer vers la cuvette de nettoyage, en ce que la cuvette de nettoyage (13a) est montée en une position opposée à la position de déchargement (f) et prévue pour contenir de l'eau pure pour le rinçage des tubes de pipetage vidés (14, 15).

2. Appareil d'analyses automatique suivant la revendication 1, caractérisé en ce qu'au moins une des tablettes à réactifs (7, 7) est montée sur une colonne verticale stationnaire (73) et agencée à rotation sur des supports (621, 622) prévus à des extrémités opposées d'une colonne verticale (73), chacune des tablettes à réactifs (7, 7) comprend un moyen de séparation formé d'organes de paroi (630a, 630b, 630c) pour diviser l'intérieur de la tablette à réactifs (7, 7) en un compartiment à basse température (620) et un compartiment à température ambiante (630), des éléments de chauffage (632) adaptés pour maintenir le compartiment à température ambiante (630) à un niveau de température prédéterminée et un système électrique relié à une source d'électricité et adapté pour activer les éléments de chauffage (632) dans lequel un moyen de commutateur (625) alimente en électricité les éléments de chauffage (632) par une première longueur de fil conducteur (623) interconnectée entre les éléments de chauffage (632) et des points de contact fixes (621a, 621b, 622a, 622b) prévus dans les supports (621, 622) qui sont faits d'une matière électriquement conductrice, une seconde longueur de fil conducteur (632b, 624a) interconnectée entre les points de contact (621a, 621b, 622b) et le moyen de commutateur (625).
